# EUROPÄISCHE PATENTANMELDUNG

(11) **EP 3 047 934 A1**
(43) Veröffentlichungstag der Anmeldung: **27.07.2016**
(21) Anmeldenummer: 16160266.9
(22) Anmeldetag: 15.04.2014
(51) Int. Cl.: B23K 26/352, B23K 26/38, B23K 26/14, B23K 15/08, C23C 4/02, B23K 26/36, B23K 26/142, B23K 26/362, B23K 26/386

(54) **VORRICHTUNG ZUR OBERFLÄCHENSTRUKTURIERUNG EINES MASCHINENELEMENTES**

(30) Priorität: 16.04.2013 DE 102013103842
(62) Teilanmeldung aus: 14401043.6
(71) Anmelder: Volkswagen AG, 38440 Wolfsburg (DE); Audi Hungaria Motor Kft., 9027 Györ (HU)
(72) Erfinder: Wiethop, Marco, 38302 Wolfenbüttel (DE); Schmidt, Knut, 38550 Isenbüttel (DE); Naake, Anja, 01328 Dresden (DE); Demmler, Mirko, 38315 Hornburg (DE); Hammer, Thorge, 38479 Tappenbeck (DE); Szczepanski, Daniel, 38440 Wolfsburg (DE)
(74) Vertreter: Scheffler, Jörg

(57) **Zusammenfassung**

Die Erfindung betrifft ein Verfahren und eine Vorrichtung zur Durchführung eines Laserbearbeitungsverfahrens zum Einbringen von Ausnehmungen im Bereich einer Kontaktfläche relativ beweglicher Maschinenelemente. Diese als Mikrostrukturierungen dienenden Ausnehmungen bilden anschließend einen optimalen Haftgrund für eine Beschichtung. Um einen von einem Laserbearbeitungskopf der Vorrichtung (9) emittierten Laserstrahl (4) mit der gewünschten hohen Vorschubgeschwindigkeit von mehr als 5 m/s bewegen zu können, ist ein den Laserstrahl (4) ablenkendes Reflektorelement (10) innerhalb eines Schutzrohres (11) angeordnet, sodass der Laserbearbeitungskopf ebenso wie eine nicht dargestellte Werkstückaufspannung für das Maschinenelement während der Bearbeitung unbeweglich ausgeführt sein können. Dabei ist das Reflektorelement (10) gemeinsam mit dem Schutzrohr (11) rotationsbeweglich um die zu dem Laserstrahl (4) koaxiale Drehachse (12) antreibbar. Der Laserstrahl (4) wird zunächst stirnseitig in das Innere des Schutzrohres (11) eingekoppelt und an dem Reflektorelement (10) um ca. 90° so abgelenkt, dass der Laserstrahl (4) durch eine Durchtrittsöffnung (13) aus dem Schutzrohr (11) austritt und auf die Zylinderinnenwandfläche (5) trifft. Darüber hinaus ist das Schutzrohr (11) aber auch vertikal in Richtung der Z-Achse beweglich angeordnet, sodass nahezu alle Bereiche der Zylinderinnenwandfläche (5) problemlos erreicht werden können. Aufgrund der Rotationsbewegung kann eine hohe Vorschubgeschwindigkeit des Laserstrahles (4) auf der Zylinderinnenwandfläche (5) realisiert werden.

## Beschreibung

Die Erfindung betrifft ein Verfahren zur Oberflächenstrukturierung eines Maschinenelementes, insbesondere im Bereich einer Kontaktfläche beweglicher Maschinenelemente, bei dem in einen oberflächennahen Bereich des Maschinenelementes Ausnehmungen mittels einer elektromagnetischen Strahlung insbesondere als Mikrostrukturierungen eingebracht werden und anschließend eine Beschichtung aufgetragen wird. Weiterhin betrifft die Erfindung eine Vorrichtung zur Oberflächenstrukturierung eines Maschinenelementes.

Ein Verfahren der genannten Art ist auf dem Gebiet der Oberflächenstrukturierung als Haftgrundvorbereitung für anschließend aufzubringende Beschichtungen bereits bekannt.

Dabei unterscheiden sich solche Strahlverfahren auf der Basis elektromagnetischer Strahlung wesentlich von den in der Praxis noch vielfach eingesetzten Strahlverfahren mit abrasiven Partikeln, die sich vor allem im Hinblick auf den Aufwand, der zur rückstandslosen Entfernung solcher Partikel betrieben werden muss, als nachteilig erwiesen haben.

Ein gattungsbildendes Beschichtungsverfahren ist beispielsweise in der DE 102 41 846 A1 beschrieben, bei dem durch Abtragen oberflächennaher Schichten eine die Haftungseigenschaften verbessernde Vergrößerung der Oberfläche des Kolbens einer Verbrennungskraftmaschine erreicht wird. Im Anschluss an den Abtrag der Schichten wird eine Beschichtung aufgetragen, die nach dem Erstarren eine dauerhafte Beschichtung bildet. Hierzu werden in die Oberfläche des Bauelementes eine Vielzahl von Ausnehmungen, beispielsweise Hinterschneidungen, mittels elektromagnetischer Strahlung, insbesondere mittels Laserstrahlung, in die Oberfläche eingebracht, wobei die Strahlung derart eingestellt werden kann, dass oberflächennahe Substanzen sublimiert werden. Der zu entfernende Werkstoff des Bauelementes wird durch die Laserstrahlung verdampft und kann dadurch problemlos mittels Druckluft aus der Ausnehmung entfernt werden. Zugleich werden auch die auf der Oberfläche anhaftenden Partikel oder Rückstände verdampft, sodass auf eine vorbereitende, insbesondere chemische Reinigung der Oberfläche verzichtet werden kann. Die Ausnehmungen werden beispielsweise mit einer Tiefe zwischen 5 und 5000 µm sowie mit einem Durchmesser zwischen 1 und 1000 µm eingebracht.

Aus der DE 36 34 708 A1 ist ein Beschichtungsverfahren bekannt, bei dem die Herstellung von Maschinenteilen, insbesondere eines Kolbenringes, beschrieben ist. Hierzu wird an einer Lauffläche, die gleitender Reibung ausgesetzt ist, eine Beschichtung mit einer galvanischen Hartchrombeschichtung vorgenommen. Diese besitzt rasterartig über die Lauffläche verteilt angeordnete, sich bis in den Grundwerkstoff erstreckende Ausnehmungen. Diese Ausnehmungen werden bereits vor dem Aufbringen der Beschichtung mittels Laserstrahlung in den Grundkörper eingebrannt, sodass sich diese Ausnehmungen beim Aufbringen einer gleichmäßigen Schicht im Anschluss an die Reinigung der Oberfläche auch in der Beschichtung abbilden.

Die DE 10 2007 023 418 B4 betrifft ein Verfahren zum Aufrauen von Bauteiloberflächen, insbesondere Metalloberflächen, zur Haftverbesserung von hierauf thermisch gespritzten Schichten, indem die Oberfläche unter Bildung von mikroskopischen Hinterschnitten aufgeraut wird. Solche Metallbauteile sind beispielsweise Zylinderliner oder Zylinderkurbelgehäuse für Verbrennungs-motoren oder Pleuel für Verbrennungsmotoren. Hierzu wird die Oberfläche unter Bildung von mikroskopischen Hinterschnitten mittels gepulster Laserstrahlen aufgeraut, wobei der Laserstrahl auch schräg auf die Oberfläche einwirken kann. Durch gepulste Laser wird in Abhängigkeit von Energiedichte, Fokusgröße und Substratmaterial eine definierte Formtasche eingebracht. Durch einen nahezu explosionsartigen Materialabtrag verdampft das Material vollständig, ohne dass sich störende Material-Ablagerungen um den Rand des Loches ablagern bzw. niederschlagen.

Ferner beschreibt die WO 96/33837 A1 ein Verfahren zur Oberflächenvorbereitung eines Werk-stückes mit einem metallischen Trägermaterial, bei dem ein oberflächliches Aufschmelzen vorgenommen wird, um anhaftende Schichten zu beseitigen, indem diese beispielsweise verdampft werden.

Vor diesem Hintergrund liegt der Erfindung die Aufgabe zugrunde, das Verfahren der eingangs genannten Art derart auszugestalten, dass eine schnelle und effiziente Bearbeitung durchführbar ist und Nachbearbeitungen des mit der Beschichtung zu versehenden Maschinenelementes entbehrlich sind. Weiterhin liegt der Erfindung die Aufgabe zugrunde, eine Vorrichtung zur Durchführung des Verfahrens zu schaffen.

Die erstgenannte Aufgabe wird gelöst mit einem Verfahren gemäß den Merkmalen des Patentanspruches 1. Die Unteransprüche betreffen besonders zweckmäßige Weiterbildungen der Erfindung.

Erfindungsgemäß ist also ein Verfahren vorgesehen, bei dem die elektromagnetische Strahlung als Laserstrahlung durch einen Laser, insbesondere einen Single-Mode-Laser, beispielsweise einen Faserlaser, mit einer Leistung von mehr als 800 W auf höchstens eine Fläche von 0,01 mm² und mit einer Vorschubgeschwindigkeit eines Fokuspunktes relativ zu dem Maschinenelement zwischen 5 m/s und 50 m/s, insbesondere zwischen 5 m/s und 20 m/s, auf die Oberfläche des Maschinenelementes durch ein Reflektorelement abgelenkt wird. Hierdurch wird ein Energieeintrag in das Maschinenelement erreicht, durch den in überraschend einfacher Weise durch ein explosionsartiges Verdampfen eines Teiles der erzeugten Schmelze die verbliebene Restschmelze mit hoher Geschwindigkeit und zugleich kontrolliert ausgeworfen wird. Im Gegensatz zu dem Stand der Technik, bei dem entweder ein geringerer Energieeintrag dazu führt, dass die Schmelze durch zusätzliche Hilfsmittel entfernt werden muss, oder aber ein hoher Energieeintrag dazu genutzt wird, eine vollständige Verdampfung des zu entfernenden Materialanteiles zu erreichen, wird erfindungsgemäß der Materialabtrag wesentlich beschleunigt. Durch die hohe Vorschubgeschwindigkeit verlässt die Schmelze in einem einstellbaren Winkel entgegengesetzt zu der Wirkrichtung der Laserstrahlung die so erzeugte Ausnehmung. Erfindungsgemäß wird hierzu ein fokussierter Laserstrahl mit vergleichsweise hoher Leistung und einer hohen Mindestvorschubgeschwindigkeit relativ über die mit den Ausnehmungen zu versehende Oberfläche bewegt, sodass der Werkstoff des Maschinenelementes im Bereich des Fokuspunktes des Laserstrahles explosionsartig sublimiert und die Oberfläche dadurch partiell aufreißt oder gefurcht wird. Im Gegensatz zum bloßen Aufschmelzen der Oberfläche wird durch das explosionsartige Sublimieren das Zusammenfließen der Schmelze hinter dem Fokuspunkt der Laserstrahlung vermieden. Durch die explosionsartige Sublimation des Werkstoffes wird die Oberfläche zusätzlich gereinigt, da oberflächliche Verschmutzungen und Oxide ebenfalls sublimieren oder durch die kinetische Energie des explodierenden Plasmas weggeschleudert werden.

Dabei wird der Laserstrahl auf einen vergleichsweise kleinen Punkt auf der Oberfläche fokussiert. Ein vorteilhafter Fokusdurchmesser liegt zwischen 20 µm und 100 µm, insbesondere bei ca. 50 µm, bei einer Brennweite von 500 mm. Besonders vorteilhaft sind dabei eine Mindestvorschubgeschwindigkeit von 16 m/s sowie eine Laserleistung von 1 kW.

Bei dem durch die Ausnehmungen gebildeten Muster können Linien mit einem geringen Abstand erzeugt werden. Hierzu werden die Ausnehmungen mit einer Tiefe zwischen 10 µm und 50 µm, vorzugsweise bis maximal 40 µm, und mit einer Breite zwischen 50 µm und 200 µm in die Oberfläche eingebracht. Hierdurch kann die Liniendichte wesentlich erhöht werden, wobei auf einer Breite von nur einem Millimeter bis zu 15 Linien realisiert werden können.

Die Leistung ist abhängig von den Materialeigenschaften des Maschinenelementes, wobei die Laserstrahlung bei einem Werkstoff mit Aluminium als einem wesentlichen Materialanteil mit einer Leistung von 800 W bis 2 kW, oder bei einem Werkstoff, der im Wesentlichen aus einem Grauguss besteht, mit einer Leistung von 1,5 kW bis 3 kW auf höchstens eine Fläche von 0,01 mm² auf den abzutragenden Bereich des Maschinenelementes gerichtet wird. Dabei kann die Laserleistung im Hinblick auf die Vorschubgeschwindigkeit sowie die Werkstoffbeschaffenheit und den Absorptionsgrad der Oberfläche für die Laserstrahlung optimiert werden.

Vorzugsweise erfolgt das Einbringen der Ausnehmungen linienförmig kontinuierlich oder unterbrochen, wobei die Ausnehmungen zumindest abschnittsweise einer Sinusform und/oder Rechteckform folgen. Dadurch wird ein verstärkter Schmelzeauswurf erreicht und zugleich eine hohe Vorschubgeschwindigkeit realisiert, wobei verschiedene Muster oder Strukturen der Ausnehmungen einander ergänzen oder überlagern können. Vorzugsweise werden so Linienstrukturen mit parallelen, bei Bohrungen spiralförmigen Linien oder Karo- und Rautenstrukturen mit sich kreuzenden Linien sowie kreis- oder ellipsenförmige Strukturen erzeugt. Auch zufällige oder unregelmäßige Strukturen können mittels der Laserstrahlung in die Oberfläche als Ausnehmungen eingebracht werden.

Die Ausnehmungen werden bevorzugt mit einer Orientierung quer zur Beanspruchungsrichtung in die Oberfläche eingebracht, die gegebenenfalls auch von der Flächennormalen abweichen kann. Hierzu wird die elektromagnetische Strahlung mit einem spitzen Winkel, insbesondere zwischen 30° und 60° geneigt, gegenüber der Flächennormalen des Oberflächenbereiches des Maschinenelementes mit einer Orientierung in Richtung der Vorschubbewegung ausgerichtet, sodass bei hohen Vorschubgeschwindigkeiten die Schmelze in einem entsprechenden Winkel zu der Wirkrichtung des Laserstrahles aus der Ausnehmung ausgeworfen wird.

Selbstverständlich ist das erfindungsgemäße Verfahren nicht auf bestimmte Maschinenelemente beschränkt, sondern kann vielmehr in Erfolg versprechender Weise in nahezu allen technischen Anwendungsgebieten eingesetzt werden. Als besonders vielversprechend hat sich eine Anwendung des Verfahrens bei Maschinenelementen erwiesen, die Teil einer Brennkraftmaschine, insbesondere ein Kolben, oder eines Getriebes sind oder als eine Zylinderlaufbahn, Zylinderkurbelgehäuse, Zylinderbohrungen, Pleuellager, Hubzapfenlager von Kolbenmotoren oder Kolbenverdichtern, Turbinenteile in der Luft und Raumfahrt oder im Kraftwerksbereich, beispielsweise Turbinenschaufeln, Verdichterschaufeln o.ä. vorgesehen sind.

Die so erfindungsgemäß erzeugten Ausnehmungen eignen sich aufgrund der guten Oberflächenqualität, die insbesondere frei von Rückständen und Anhaftungen ist, zum Auftragen der Beschichtung ohne weitere Vorbehandlungen, sodass die Beschichtung durch thermisches Spritzen oder durch Lackieren aufgebracht werden kann.

Die zweitgenannte Aufgabe, eine Vorrichtung zur Durchführung des Verfahrens zu schaffen, wird erfindungsgemäß mit einem um seine Mittellängsachse schwenkbeweglich und/oder translatorisch beweglich antreibbaren Reflektorelement zur Ablenkung des Laserstrahles auf den zu bearbeitenden Bereich der Oberfläche des Maschinenelementes gelöst. Hierdurch wird in einfacher Weise die gewünschte Ablenkung des Laserstrahls auf die Oberfläche und die Vorschubgeschwindigkeit des Fokuspunktes auf der Oberfläche des Maschinenelementes erreicht, ohne dass hierzu eine Bewegung des Laserbearbeitungskopfes oder des Maschinenelementes erforderlich ist. Im Falle einer Zylinderbohrung wird der Laserstrahl zur Bearbeitung vorzugsweise parallel zur Zylindermittelachse ausgerichtet. Die Ablenkung auf einen nahezu beliebigen Oberflächenpunkt der Innenwandfläche der Zylinderbohrung wird dann mittels des beweglichen Reflektorelementes erreicht, welches beispielsweise zumindest abschnittsweise kegelförmig ausgeführt sein kann. Durch eine translatorische Bewegung des kegelförmigen Reflektorelementes parallel zur Zylindermittelachse wird der Fokuspunkt in axialer Richtung verlagert, während eine translatorische Bewegung des Reflektorelementes in der Querschnittsebene der Zylinderbohrung eine Ablenkung auf beliebige Umfangsbereiche der Zylinderinnenwandfläche gestattet.

Dabei hat es sich auch bereits als besonders vorteilhaft erwiesen, wenn die Vorrichtung zumindest einen Strahlteiler aufweist, um so zugleich mehrere Fokuspunkte auf der Oberfläche des Maschinenelementes zu realisieren. Hierzu eignet sich beispielsweise ein teildurchlässiger Spiegel.

Bei einer weiteren, ebenfalls besonders zweckmäßigen Ausgestaltung der erfindungsgemäßen Vorrichtung ist das Reflektorelement innerhalb eines Schutzrohres angeordnet und gemeinsam mit diesem rotationsbeweglich antreibbar, wobei das Schutzrohr zumindest eine Durchtrittsöffnung für den abgelenkten Laserstrahl aufweist. Der Laserstrahl wird dabei stirnseitig durch den Öffnungsquerschnitt des Schutzrohres eingekoppelt und an einem von dem Rohr umschlossenen, beispielsweise als Planspiegel ausgeführten Reflektorelement abgelenkt, sodass der Laserstrahl durch die Durchtrittsöffnung auf die Innenwandfläche der Zylinderbohrung abgelenkt wird. Innerhalb des Schutzrohres ist das Reflektorelement so gegenüber Verunreinigungen oder Beschädigungen optimal geschützt.

Zusätzlich kann gemäß einer weiteren sinnvollen Weiterbildung der erfindungsgemäßen Vorrichtung zur Erzeugung einer Luftströmung eine Luftzuführung und/oder eine Absaugung vorgesehen sein. Beispielsweise kann so im Inneren des Schutzrohres ein Überdruck erzeugt werden, durch den das Eindringen von gasförmigen oder festen Fremdstoffen durch die Durchtrittsöffnung in das Innere des Schutzrohres vermieden wird.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Vorrichtung zur Bearbeitung eines Maschinenelementes mittels Laserstrahlung mit einem kegelförmigen Reflektorelement;
- Fig. 2: eine weitere Vorrichtung zur Laserbearbeitung mit einem in einem rotationsbeweglichen Schutzrohr angeordneten Reflektor;
- Fig. 3: eine Variante der in Figur 2 gezeigten Vorrichtung mit einem Strahlteiler;
- Fig. 4: eine vergrößerte Detaildarstellung des in Figur 2 gezeigten, den Reflektor aufnehmenden Schutzrohres;
- Fig. 5: eine Variante des in Figur 4 gezeigten Schutzrohres mit einem eine Durchtrittsöffnung einschließenden Strahlkanal für den Laserstrahl.

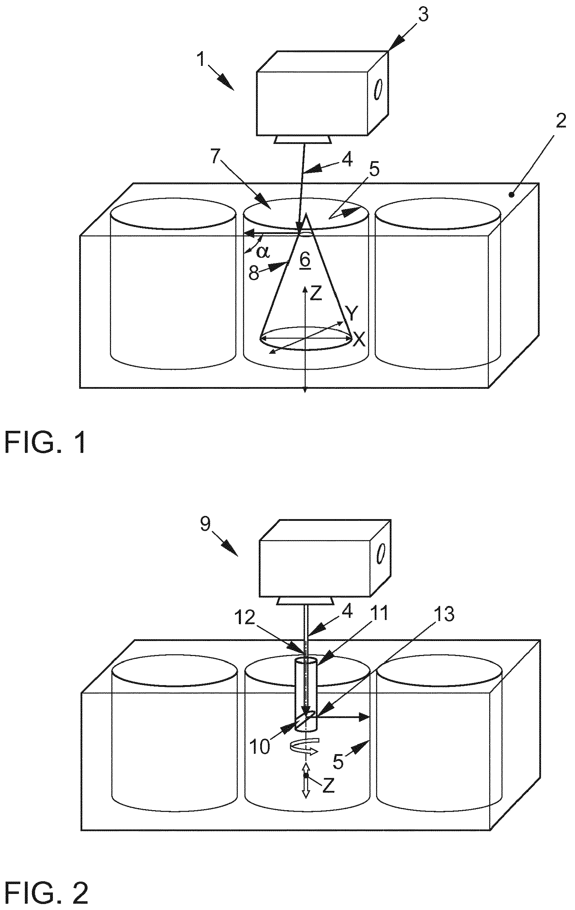

Eine erfindungsgemäße Vorrichtung 1 zur Durchführung eines Laserbearbeitungsverfahrens wird nachstehend anhand der Figuren 1 bis 5 näher erläutert. Die Vorrichtung 1 dient dem Einbringen von Ausnehmungen im Bereich einer Kontaktfläche relativ beweglicher, hier als Zylinderlauffläche für einen nicht gezeigten Kolben beispielhaft dargestellter Maschinenelemente 2. Diese als Mikrostrukturierungen dienenden Ausnehmungen bilden anschließend einen optimalen Haftgrund für eine in an sich bekannter Weise aufzubringende Beschichtung.

Um einen von einem Laserbearbeitungskopf 3 emittierten Laserstrahl 4 mit der gewünschten hohen Vorschubgeschwindigkeit von mehr als 5 m/s entlang einer Zylinderinnenwandfläche 5 des Maschinenelementes 2 bewegen zu können, ist ein den Laserstrahl 4 variabel ablenkendes Reflektorelement 6 innerhalb einer Zylinderbohrung 7 beweglich angeordnet, sodass der Laserbearbeitungskopf 3 ebenso wie eine nicht dargestellte Werkstückaufspannung für das Maschinenelement 2 während der Bearbeitung unbeweglich ausgeführt sein können.

Wie aus der in Figur 1 dargestellten Variante ersichtlich, hat das Reflektorelement 6 eine im Wesentlichen kegelförmige Grundform und ist in der Zylinderbohrung 7 beweglich angeordnet, sodass der Laserstrahl 4 an einer Kegelmantelfläche 8 reflektiert wird. indem das Reflektorelement 6 in Richtung der X-Achse, der Y-Achse und der Z-Achse unabhängig voneinander translatorisch beweglich ausgeführt ist, kann der Laserstrahl 4 jeden Punkt innerhalb eines Bearbeitungsbereiches der Zylinderinnenwandfläche 5 erreichen. Indem das Reflektorelement 6 in Richtung der Z-Achse bewegt wird, verlagert sich ein Laserfokuspunkt entlang der Zylinderinnenwandfläche 5 ebenfalls parallel zur Z-Achse, während die Ablenkung entlang einer Umfangslinie der Zylinderquerschnittsfläche allein durch die Bewegung des Reflektorelementes 6 in Richtung der X-Achse und der Y-Achse realisiert wird. In vorteilhafter Weise trifft der Laserstrahl 4 dabei mit einem vorbestimmten Winkel α, insbesondere parallel zur Flächennormalen der Zylinderinnenwandfläche 5 oder mit einem spitzen Winkel hierzu, auf die Zylinderinnenwandfläche 5.

Demgegenüber zeigt Figur 2 eine Vorrichtung 9, bei der das hierbei mit einem ebenen Spiegel ausgestattete Reflektorelement 10 innerhalb eines Schutzrohres 11 angeordnet ist. Dabei ist das Reflektorelement 10 gemeinsam mit dem Schutzrohr 11 rotationsbeweglich um die zu dem Laserstrahl 4 koaxiale Drehachse 12 antreibbar. Der Laserstrahl 4 wird zunächst stirnseitig in das Innere des Schutzrohres 11 eingekoppelt und an dem Reflektorelement 10 um ca. 90° so abgelenkt, dass der Laserstrahl 4 durch eine Durchtrittsöffnung 13 aus dem Schutzrohr 11 austritt und auf die Zylinderinnenwandfläche 5 trifft. Darüber hinaus ist das Schutzrohr 11 aber auch vertikal in Richtung der Z-Achse beweglich angeordnet, sodass nahezu alle Bereiche der Zylinderinnenwandfläche 5 problemlos erreicht werden können. Aufgrund der Rotationsbewegung kann im Gegensatz zu der translatorischen Bewegung eine wesentlich höhere Vorschubgeschwindigkeit des Laserstrahles 4 auf der Zylinderinnenwandfläche 5 realisiert werden.

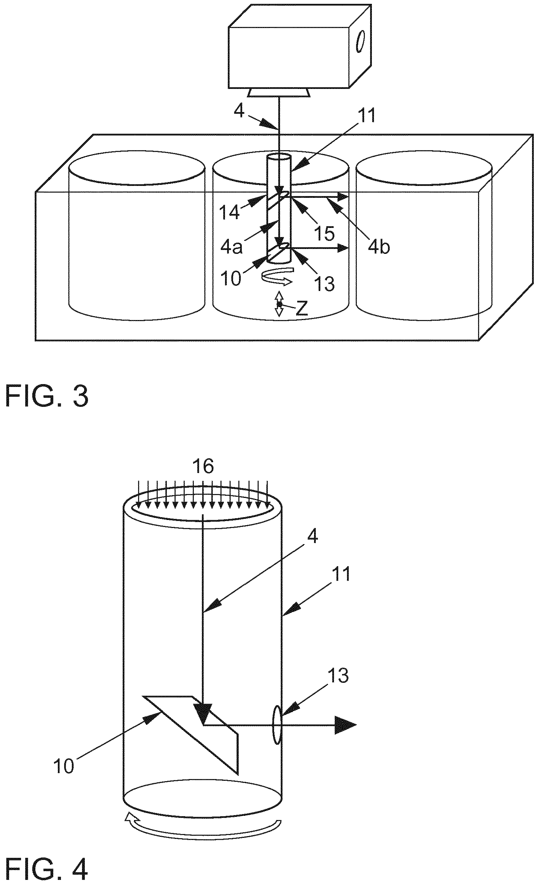

Bei einer in Figur 3 gezeigten Variante der in Figur 2 dargestellten Vorrichtung 9 trifft der Laserstrahl 4 im Inneren des Schutzrohres 11 zunächst auf einen Strahlteiler 14, der als halbdurchlässiger Spiegel ausgeführt ist. Ein erster Teilstrahl 4a tritt dabei ohne Richtungsänderung durch den Strahlteiler 14 hindurch und wird an dem Reflektorelement 10 so abgelenkt, dass dieser Teilstrahl 4a durch die Durchtrittsöffnung 13 austritt. Ein zweiter Teilstrahl 4b wird hingegen bereits an dem Strahlteiler 14 abgelenkt und tritt parallel zu dem ersten Teilstrahl 4a durch eine zweite Durchtrittsöffnung 15 aus dem Schutzrohr 11 aus. Hierdurch wird eine noch kürzere Bearbeitungsdauer durch zwei synchron bewegliche Fokuspunkte erreicht.

In Figur 4 ist in einer vergrößerten Ansicht das Schutzrohr 11 der in Figur 2 gezeigten Vorrichtung 9 dargestellt. Wie zu erkennen, tritt der Laserstrahl 4 stirnseitig in das Schutzrohr 11 ein und wird an dem prismatischen Reflektorelement 10 so abgelenkt, dass der Laserstrahl 4 durch die Durchtrittsöffnung 13 austreten kann. Lediglich andeutungsweise ist eine Luftzuführung 16 dargestellt, durch die dem Schutzrohr 11 Umgebungsluft mit Überdruck zugeführt wird. Auf diese Weise wird das Eindringen von Fremdstoffen, insbesondere flüchtige Bestandteile des abgetragenen Oberflächenmaterials, durch die Durchtrittsöffnung 13 in das Innere des Schutzrohres 11 zuverlässig vermieden.

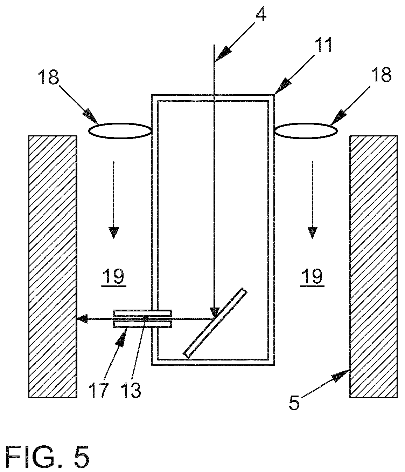

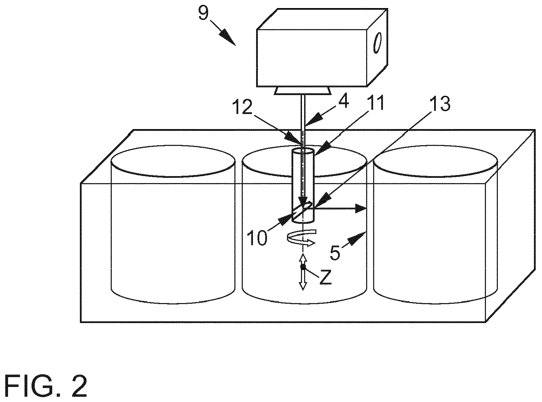

Einem ähnlichen Zweck dient eine in Figur 5 gezeigte Variante des Schutzrohres 11 gemäß der in Figur 2 gezeigten Vorrichtung 9, bei der das Schutzrohr 11 weitgehend geschlossen ausgeführt ist. Stirnseitig kann hierzu beispielsweise ein für die Wellenlänge des Laserstrahles 4 transparentes Fenster eingesetzt werden. Um im Bereich der von einem hülsenförmigen Strahlkanal 17 eingefassten Durchtrittsöffnung 13 für den Laserstrahl 4 eine unerwünschte Ablagerung der flüchtigen Bestandteile, die aufgrund der Lasereinwirkung in der Oberfläche der Zylinderinnenwandfläche 5 durch den Abtrag freigesetzt werden, zu verhindern, ist eine kreisringförmige Luftzuführung 18 vorgesehen. Diese dient einer gleichmäßigen Luftströmung in dem Ringspalt 19 zwischen dem Schutzrohr 11 und der Zylinderinnenwandfläche 5. Diese Variante eignet sich bevorzugt für solche Maschinenelemente, bei denen eine Bohrung, insbesondere eine Zylinderbohrung, als Durchgangsloch ausgeführt ist, sodass an einer der Luftzuführung 18 abgewandten Seite eine Luftabsaugung vorgesehen werden kann.

Bei allen dargestellten Varianten sind vorzugsweise an sich bekannte Maßnahmen vorzusehen, mit denen die Fokuslage entsprechend der veränderten Länge des Strahlenganges zwischen dem Laserbearbeitungskopf 3 und dem Laserfokus nachgeführt werden kann, sodass ein konstanter Fokusdurchmesser in unterschiedlichen Bearbeitungsbereichen sichergestellt werden kann.

## Patentansprüche

1. Verfahren zur Oberflächenstrukturierung eines Maschinenelementes (2), insbesondere im Bereich einer Kontaktfläche beweglicher Maschinenelemente (2), bei dem in einen oberflächennahen Bereich des Maschinenelementes (2) Ausnehmungen mittels einer elektromagnetischen Strahlung insbesondere als Mikrostrukturierungen eingebracht werden, **dadurch gekennzeichnet, dass** die elektromagnetische Strahlung als Laserstrahlung eines Lasers mit einer Leistung von mehr als 800 W auf höchstens eine Fläche von 0,01 mm² und mit einer Vorschubgeschwindigkeit eines Fokuspunktes relativ zu dem Maschinenelement (2) zwischen 5 m/s und 50 m/s, insbesondere zwischen 5 m/s und 20 m/s, auf die Oberfläche des Maschinenelementes (2) gerichtet wird.

2. Verfahren nach Anspruch 1, **dadurch gekennzeichnet, dass** die Ausnehmungen mit einer Tiefe zwischen 10 µm und 50 µm, vorzugsweise bis maximal 40 µm, und mit einer Breite zwischen 50 µm und 200 µm in den oberflächennahen Bereich des Maschinenelementes (2) eingebracht werden.

3. Verfahren nach den Ansprüchen 1 oder 2, **dadurch gekennzeichnet, dass** die Laserstrahlung bei einem Werkstoff mit Aluminium als wesentlichen Materialanteil mit einer Leistung von 800 W bis 2 kW auf höchstens eine Fläche von 0,01 mm², oder bei einem Werkstoff, der im Wesentlichen aus einem Grauguss besteht, mit einer Leistung von 1,5 kW bis 3 kW auf höchstens eine Fläche von 0,01 mm² auf den Bereich des Maschinenelementes (2) gerichtet wird.

4. Verfahren nach zumindest einem der vorangehenden Ansprüche, **dadurch gekennzeichnet, dass** die Ausnehmungen linienförmig und zumindest abschnittsweise einer Sinusform und/oder Rechteckform folgend eingebracht werden.

5. Verfahren nach zumindest einem der vorangehenden Ansprüche, **dadurch gekennzeichnet, dass** die Laserstrahlung mit einem spitzen Winkel, insbesondere zwischen 30° und 60° geneigt, gegenüber der Flächennormalen des Oberflächenbereiches des Maschinenelementes (2) mit einer Orientierung in Richtung der Vorschubbewegung ausgerichtet wird.

6. Verfahren nach zumindest einem der vorangehenden Ansprüche, **dadurch gekennzeichnet, dass** eine Beschichtung auf den laserstrukturierten Bereich des Maschinenelementes (2) insbesondere durch thermisches Spritzen oder Lackieren aufgebracht wird.

7. Vorrichtung (1, 9) zur Oberflächenstrukturierung eines Maschinenelementes (2), bei dem in einen oberflächennahen Bereich des Maschinenelementes (2) Ausnehmungen mittels einer elektromagnetischen Strahlung insbesondere als Mikrostrukturierungen einbringbar sind, mit einem schwenkbeweglich und/oder translatorisch beweglich antreibbaren Reflektorelement (6, 10) zur Ablenkung der elektromagnetischen Strahlung auf den zu bearbeitenden Bereich der Oberfläche des Maschinenelementes (2).

8. Vorrichtung (9) nach Anspruch 7, **dadurch gekennzeichnet, dass** die Vorrichtung (9) zumindest einen Strahlteiler (14) aufweist.

9. Vorrichtung (9) nach Anspruch 7 oder 8, **dadurch gekennzeichnet, dass** das Reflektorelement (10) innerhalb eines Schutzrohres (11) angeordnet und gemeinsam mit diesem rotationsbeweglich antreibbar ist und dass das Schutzrohr (11) zumindest eine Durchtrittsöffnung (13, 15) für den abgelenkten Laserstrahl (4a, 4b) aufweist.

10. Vorrichtung (9) nach zumindest einem der Ansprüche 7 bis 9, **dadurch gekennzeichnet, dass** die Vorrichtung (9) zur Erzeugung einer Luftströmung mit einer Luftzuführung (16, 18) und/oder einer Absaugung ausgestattet ist.

## Geänderte Patentansprüche

### Geänderte Patentansprüche gemäss Regel 137(2) EPÜ.

1. Vorrichtung (1, 9) zur Oberflächenstrukturierung eines Maschinenelementes (2), bei dem in einen oberflächennahen Bereich des Maschinenelementes (2) Ausnehmungen mittels einer elektromagnetischen Strahlung insbesondere als Mikrostrukturierungen einbringbar sind, mit einem schwenkbeweglich und/oder translatorisch beweglich antreibbaren Reflektorelement (6, 10) zur Ablenkung der elektromagnetischen Strahlung auf den zu bearbeitenden Bereich der Oberfläche des Maschinenelementes (2), **dadurch gekennzeichnet, dass** das Reflektorelement (10) innerhalb eines Schutzrohres (11) angeordnet und gemeinsam mit diesem rotationsbeweglich antreibbar ist und dass das Schutzrohr (11) zumindest eine Durchtrittsöffnung (13, 15) für den abgelenkten Laserstrahl (4a, 4b) aufweist.

2. Vorrichtung (9) nach Anspruch 1, **dadurch gekennzeichnet, dass** die Vorrichtung (9) zumindest einen Strahlteiler (14) aufweist.

3. Vorrichtung (9) nach Anspruch 1 oder 2, **dadurch gekennzeichnet, dass** die Vorrichtung (9) zur Erzeugung einer Luftströmung mit einer Luftzuführung (16, 18) und/oder einer Absaugung ausgestattet ist.
